# EUROPÄISCHE PATENTSCHRIFT

(11) **EP 3 683 507 B1**
(45) Veröffentlichungstag und Bekanntmachung des Hinweises auf die Patenterteilung: **03.05.2023**
(21) Anmeldenummer: 19217882.0
(22) Anmeldetag: 19.12.2019
(51) Int. Cl.: F24D 11/02, B05D 7/22, F16L 58/04, F16L 58/10

(54) **VERFAHREN ZUM NACHRÜSTEN EINER BESTANDSVERROHRUNG**
METHOD FOR RETROFITTING EXISTING PIPEWORK
PROCÉDÉ DE MISE À NIVEAU D'UNE TUYAUTERIE EXISTANTE

(30) Priorität: 18.01.2019 DE 102019101309
(43) Veröffentlichungstag der Anmeldung: 22.07.2020
(73) Patentinhaber: Innogy SE, 45128 Essen (DE)
(72) Erfinder: Sailer, Bruno, 46282 Dorsten (DE); Wittkowski, Alexander, 45130 Essen (DE)
(74) Vertreter: Cohausz & Florack

(56) Entgegenhaltungen:
- WO-A2-2009/117296
- DE-A1- 10 358 253
- DE-A1- 19 527 901
- DE-A1-102017 100 946
- GB-A- 2 561 197

## Beschreibung

Der Gegenstand betrifft ein Verfahren zum Nachrüsten einer Bestandsverrohrung.

In bestehenden Hausinstallationen, insbesondere in Bestandsverrohrungen für Heizsysteme, wird in der Regel Wasser geführt. Wasserführende Heizsysteme sind zumindest im mitteleuropäischen Raum weit verbreitet und werden zum überwiegenden Teil mit Wärme aus Verbrennungsprozessen gespeist.

Aus der DE 103 58 253 A1 ist ein Verfahren zur Sanierung von Bestandsleitungen bekannt, wobei Verkrustungen entfernt werden und anschließend eine Beschichtung aufgebracht wird. Dieses Dokument offenbart ein Verfahren gemäß dem Oberbegriff des Anspruchs 1.

Die DE 195 27 901 A1 beschreibt ein Verfahren zum Sanieren von Rohrleitungen bei ebenfalls zunächst Verkrustungen entfernt werden und anschließend eine Beschichtung aufgebracht wird.

Die GB 256 11 97 A beschreibt ein Innenrohr zum Schutz einer Verrohrung für Hitze. Im Rahmen der Diskussion um die Reduzierung von CO₂-Emmisionen wird diskutiert, elektrisch betriebene Raumwärmegeräte, wie beispielsweise Wärmepumpen oder Stromdirektheizungen zu fördern. Insbesondere bei der Gewinnung elektrischer Energie aus Fotovoltaik oder Windenergie, sowie ggf. anderer regenerativer Quellen, kann dadurch die CO₂-Emmision durch Heizgeräte reduziert werden.

Bestehende wasserführende Heizsysteme verfügen in der Regel jedoch über einen Heizkessel sowie in den Räumen verteilte Radiatoren. Die Radiatoren (Heizkörper) als Wärmeabgabesysteme benötigen jedoch hohe Vorlauftemperaturen um eine ausreichende Erwärmung eines Raumes zu ermöglichen. Diese hohen Vorlauftemperaturen stellen insbesondere Wärmepumpen vor Probleme, da diese die Effizienz der Wärmepumpen stark beeinträchtigen oder den Einsatz einer Wärmepumpe gänzlich ausschließen. Bekannte Luft-Wasser oder Luft-Luft-Wärmepumpen können die benötigte Vorlauftemperatur für die Heizkörper in der Regel nicht effizient bereitstellen.

Auf Basis dieser Erkenntnis liegt dem Gegenstand die Aufgabe zugrunde, bauseits vorhandene Bestandsverrohrungen für den Einsatz neuer Wärmeabgabesysteme auszurüsten.

Diese Aufgabe wird durch ein Verfahren nach Anspruch 1 gelöst.

Gegenständlich wird eine Sanierung/Erneuerung bestehender, installierter Heizsysteme erheblich vereinfacht. Durch eine Umstellung des Heizsystems weg von einem wasserführenden Heizsystem zu einem anderen Medium (nachfolgend auch Fluid oder Kältemittel genannt) zum Transport der Heizenergie, ist eine Umrüstung der Bestandsverrohrung notwendig. Fluide, die zum Betrieb von Heiz- und Kühlsystemen zum Einsatz kommen, benötigen andere Rohrquerschnitte als dies bei Bestandssystemen der Fall ist. Daher wird vorgeschlagen, die beiden Rohre einer Bestandsverrohrung mit einer Innenwandverkleidung auszustatten. Ein erstes und ein zweites Rohr einer Bestandsverrohrung wird jeweils mit einer Innenwandverkleidung ausgestattet.

Insbesondere durch ein Ausnutzen eines Verdampfungs- und Kondensations-(Verflüssigungs-)prozesses kann mit einem Kältemittel ein Heiz-/Kühlsystem betrieben werden. Das Kältemittel benötigt aber unterschiedliche Leitungsquerschnitte, wobei auf der flüssigkeitsführenden Seite ein geringerer Leitungsquerschnitt notwendig ist als auf der gasführenden Seite des Systems.

Mit Hilfe des gegenständlichen Verfahrens wird eine Bestandsverrohrung mit einer Innenwandverkleidung ausgestattet, so dass ein erstes Rohr der Bestandsverrohrung einen kleineren Innendurchmesser aufweist als ein zweites Rohr der Bestandsverrohrung. Durch diese unterschiedlichen Querschnitte ist es möglich, dass Kältemittel in der gewünschten Art und Weise von einem Zentralgerät zu einem Raumgerät und zurück zu transportieren, wobei durch das Kältemittel ein Energietransport von einem Zentralgerät zu einem Raumgerät oder umgekehrt möglich ist, so dass das Raumgerät heizen und/oder kühlen kann.

Wenn nachfolgend von Heizsystem die Rede ist, so kann darunter stets auch ein Kühlsystem verstanden werden. Im Falle eines Heizsystems erfolgt eine Wärmeabgabe an einem Verflüssiger und im Falle eines Kühlsystems erfolgt eine Kälteabgabe an einem Verdampfer. Ein Verdampfer und ein Verflüssiger können in Kombination oder alternativ zueinander in einem Raumgerät zur Verfügung gestellt werden. Im ersten Fall ist das Raumgerät ein Wärme und Kältegerät, im zweiten Fall ist das Raumgerät entweder ein Wärmegerät oder ein Kühlgerät. Zur Wärme und/oder Kälteabgabe in dem Raumgerät kann ein Wärmetauscher vorgesehen sein, der die von dem Fluid abgegebene Wärme/Kälte an ein anderes Medium tauscht, so dass mit diesem anderen Medium die eigentliche Temperierung des Raumes erfolgt.

Ein Zentralgerät kann den jeweils komplementären Verdampfer und/oder Verflüssiger aufweisen, so dass entweder die Abwärme oder die abgeführte Kälte an dem Verdampfer und/oder Verflüssiger an die Umwelt abgegeben werden kann. An dem Zentralgerät kann darüber hinaus ein Kompressor (Verdichter) und ein Entspannungsventil angeordnet sein.

Gemäß einem Ausführungsbeispiel wird vorgeschlagen, dass die Rohre, insbesondere das erste Rohr und das zweite Rohr der Bestandsverrohrung, ein Vorlauf und ein Rücklauf eines Bestandsheizkörpers sind. Ein Bestandsheizkörper ist insbesondere ein Radiator, welcher mit Heißwasser gespeist wird. Im Vorlauf wird heißes Wasser an den Bestandsheizkörper herangeführt. Das abgekühlte Wasser wird über den Rücklauf dem Heizkessel wieder zurückgeführt. Diese beiden Rohre werden gegenständlich dafür genutzt, ein anderes Fluid zum Heizen/Kühlen zu nutzen als Wasser. Da insbesondere durch das Verdampfen und/oder Verflüssigen/Kondensieren am Zentralgerät und/oder Raumgerät ein anderes Kältemittel verlangt als Wasser, und dieses Kältemittel zur Wärme- und/oder Kälteabgabe seinen Aggregatzustand ändern muss, sind die Rohre mit unterschiedlichen Querschnitten zu versehen.

Gemäß einem Ausführungsbeispiel wird vorgeschlagen, dass zumindest eine der Innenwandverkleidungen eine Innenwandbeschichtung ist. Durch Beschichtung der Innenwand der Rohre der Bestandsverrohrung können deren Innendurchmesser gezielt reduziert werden. Darüber hinaus führt eine Beschichtung zu einer erhöhten Dichtigkeit, was bei Verwendung eines Fluides, welches vom Verdichter bis zum Verflüssiger und/oder vom Verdampfer bis zum Verflüssiger gasförmig ist, sinnvoll sein kann.

Gemäß einem Ausführungsbeispiel wird vorgeschlagen, dass zumindest eines der Rohre mit einem flüssigen Beschichtungsmittel gespült wird und dass das Beschichtungsmittel nach dem Spülen aushärtet. Durch ein Durchspülen des Rohres kann eine vollständige Innenwandverkleidung mit einem flüssigen Beschichtungsmittel erzielt werden. Nachdem das Beschichtungsmittel ausgehärtet ist, kann das verkleidete Rohr für ein neues Heizsystem eingesetzt werden.

Da beim Beschichten mittels eines flüssigen Beschichtungsmittels in der Regel nur sehr geringe Materialstärken aufgetragen werden können, wird vorgeschlagen, dass das Beschichten mittels Spülen und das anschließende Aushärten mehrere Male, zumindest zweimal, hintereinander, durchgeführt wird. Je häufiger der Schritt des Spülens und Aushärtens durchgeführt wird, desto kleiner wird der Innendurchmesser des zu verkleidenden Rohres.

Zumindest eine der Innenwandverkleidungen ist eine Rohr-in-Rohr-Verkleidung mit einem Innenrohr. Das Innenrohr wird als Rohr-in-Rohr in das Bestandsrohr eingeführt. Das Innenrohr ist zum einen naturgemäß von seinem Innendurchmesser geringer als das Außenrohr, kann andererseits darüber hinaus kann es auch aus einem Material oder Verbundmaterial gebildet sein, welches ausreichend dicht für das Kältemittel ist.

Gemäß einem Ausführungsbeispiel wird vorgeschlagen, dass das Innenrohr von einem Einlass zu einem Auslass des Rohres der Bestandsverrohrung geführt ist. Hierdurch wird eine nahtlose Innenwandverkleidung des Bestandrohres ermöglicht.

Das Innenrohr hat an seiner Außenwand im Wesentlichen radial nach außen weisende Finnen, wobei entlang des Außenumfangs des Innenrohrs zumindest zwei, bevorzugt drei oder mehr Finnen in einem Winkelabstand zu einander angeordnet sind. Mit Hilfe der Finnen kann das Innenrohr mit einem Abstand zur Innenwand der Bestandsverrohrung in die Bestandsverrohrung eingeführt werden. Die Finnen ermöglichen eine erhöhte Flexibilität beim Einführen des Innenrohrs und erlauben auch Unebenheiten in dem Bestandsrohr. Durch drei oder mehr Finnen wird erreicht, dass das Innenrohr bevorzugt umfänglich mit einem Abstand von dem Außenrohr angeordnet ist.

Gemäß einem Ausführungsbeispiel wird vorgeschlagen, dass sich die Finnen entlang einer Längserstreckung des Innenrohrs erstrecken und dass die Finnen in ihrer radialen Erstreckung bogenförmig sind. Durch die bogenförmige Erstreckung ergibt sich eine Federwirkung der Finnen, so dass die Finnen sich beim Einführen in das Rohr an Verunreinigungen an der Innenwand des Innenrohrs verformen können und somit das Einführen erleichtern.

Wie bereits erwähnt, wird vorgeschlagen, dass die mit der Innenwandverkleidung ausgestatteten Rohre an ein Heiz- und/oder Kühlgerät angeschlossen werden. Ein Heiz- und/oder Kühlgerät kann ein Raumgerät sein. Ein solches Gerät kann als Heizgerät verwendet werden, wenn es einen Verflüssiger aufweist und als Kühlgerät, wenn es einen Verdampfer aufweist. Durch eine geeignete Ventilansteuerung kann in einem solchen Gerät sowohl ein Verflüssiger als auch ein Verdampfer vorgesehen sein. Abhängig von der Strömungsrichtung des Kältemittels kann entweder der Verflüssiger oder der Verdampfer mit dem Kältemittels gespeist werden.

Wenn vorliegend von einem Kältemittels die Rede ist, so ist damit ein Fluid gemeint, welches mit einem Verdampfer und einem Verflüssiger sowie einem Verdichter und einem Expansionsventil betrieben werden kann. Ein solches Fluid kann beispielsweise Propangas sein. Die mit dem Heiz- und/oder Kühlgerät verbundenen Rohre werden mit dem Fluid beschickt. In dem ersten Rohr ist das Fluid flüssig und in dem zweiten Rohr gasförmig. In dem Rohr, in dem das Fluid flüssig ist, ist ein kleinerer Innendurchmesser bevorzugt und in dem Rohr, in dem das Fluid gasförmig ist, ist ein demgegenüber vergrößerter Innendurchmesser bevorzugt.

Die Rohre sind gemäß einem Ausführungsbeispiel ausgangsseitig an das Raumgerät (Heiz- und/oder Kühlgerät) angeschlossen und eingangsseitig an ein Zentralgerät (z.B. eine zentrale Luft-Luft oder Luft-Wasser Wärmepumpe). Das Zentralgerät weist insbesondere einen Verdichter (Kompressor) als auch ein Expansionsventil auf. Je nach Betrieb des Raumgerätes kann mit Hilfe des Zentralgerätes die Strömungsrichtung in den Rohren verändert werden.

Gemäß einem Ausführungsbeispiel wird vorgeschlagen, dass das Raumgerät und das Zentralgerät zwischen einem Heizbetrieb und einem Kühlbetrieb umschaltbar sind. Je nach Betriebsmodus fließt im Vorlauf entweder flüssiges Kältemittel von dem Zentralgerät zu dem Raumgerät und im Rücklauf gasförmiges Kältemittel von dem Raumgerät zu dem Zentralgerät oder gasförmiges Kältemittel von dem Zentralgerät zu dem Raumgerät und im Rücklauf flüssiges Kältemittel von dem Raumgerät zu dem Zentralgerät. Mit Hilfe des Zentralgeräts kann eine Flussrichtung des Kältemittels in den Rohrleitungen eingestellt werden. Hierzu können entsprechende Pumpen an dem Zentralgerät vorhanden sein, mit denen die Flussrichtung beeinflusst werden kann.

In dem Raumgerät kann ein Wärmetauscher vorgesehen sein, mit dem die von dem Fluid abgegebenen Kälte oder von dem Fluid abgegebenen Wärme an ein weiteres Trägermedium, beispielsweise Wasser, übertragen werden kann, um den Raum zu heizen. In einem Kühlbetrieb des Raumgeräts wird das erste Rohr für den Vorlauf des Fluides genutzt und das zweite Rohr für den Rücklauf des Fluides. Dies ist anders in einem Heizbetrieb, in dem das Raumgerät das erste Rohr als Rücklauf nutzt und das zweite Rohr als Vorlauf nutzt. In dem Zentralgerät kann ein Wärmetauscher vorgesehen sein, mit dem die von dem Fluid abgegebenen Kälte oder von dem Fluid abgegebenen Wärme an ein weiteres Trägermedium, beispielsweise Wasser, übertragen werden kann, um über die Umgebung die Wärme oder Kälte abzuleiten.

Gemäß einem Ausführungsbeispiel wird vorgeschlagen, dass zur Innenwandverkleidung ein endoskopisches Führungsseil genutzt wird. Dieses kann in eine erste Öffnung eines der Bestandsrohre eingeführt werden. Ferner kann ein Zugseil vorgesehen sein, dass in die gegenüberliegende zweite Öffnung des Bestandsrohres eingeführt wird. Mittels des Zugseils kann das Führungsseil dann durch das Rohr gezogen werden. An dem Führungsseil kann das Innenrohr befestigt sein, mit Hilfe des Führungsseils kann das Innenrohr durch das Bestandsrohr gezogen werden.

Das Führungsseil weist gemäß einem Ausführungsbeispiel eine in das Rohr einführbare Spitze auf, welche mit umlaufenden Finnen ausgestattet ist. Die Finnen sind radial nach außen weisend und können beispielsweise entsprechend den Finnen des Rohres sein.

Die Spitze des Führungsseils kann bevorzugt permanentmagnetisch sein. Hierdurch kann von außen des Rohres die Spitze durch das Rohr mit Hilfe eines Permanentmagneten gezogen werden.

Darüber hinaus kann das Zugseil eine Fangschlaufe aufweisen. Die Fangschlaufe kann korbartig sein und mit der Spitze des Führungsseils derart interagieren, dass sich ein Formschluss zwischen der Fangschlaufe und der Spitze ergibt, so dass mittels des Zugseils das Führungsseil durch das Rohr gezogen werden kann.

Nachfolgend wird der Gegenstand anhand einer Ausführungsbeispiele zeigenden Zeichnung näher erläutert. In der Zeichnung zeigt:
Fig. 1 eine Bestandsverrohrung;
Fig. 2 ein Zentralgerät und ein Raumgerät;
Fig. 3 eine Innenwandverkleidung mittels eines Innenrohrs;
Fig. 4a, b Führungsseil und Zugseil.

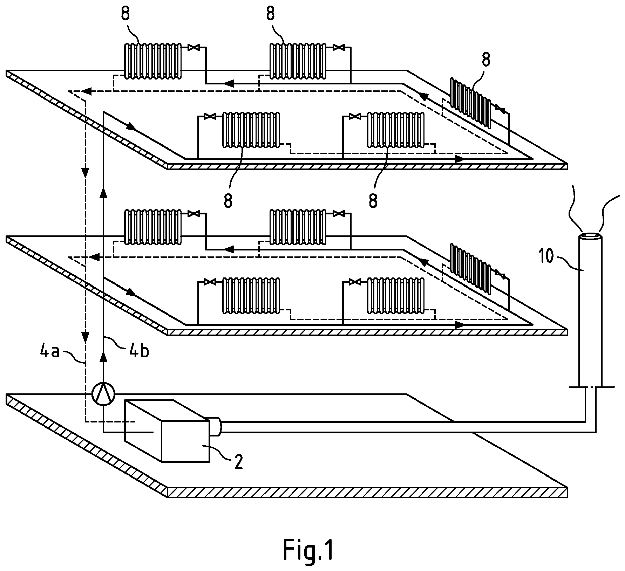

Fig. 1 zeigt schematisch eine Bestandsverrohrung. Von einem mittels fossiler Brennstoffe betriebenen Heizkessel 2 führen zwei Rohre 4a, 4b durch Wände 6 eines Hauses zu Heizkörpern 8. Bei der Verbrennung entstehen Abgase, die über einen Schornstein 10 abgeleitet werden. Diese Heizmethode ist jedoch hinsichtlich der Bestrebungen zu verringertem CO2-Ausstoß nicht mehr zeitgemäß und der Heizkessel 2 wird vorzugsweise durch eine moderne Heizanlage, beispielsweise eine Luft-/Wasserwärmepumpe oder eine Luft/Luftwärmepumpe ausgetauscht.

Mit Hilfe einer solchen Wärmepumpe können die Heizkörper 8 aber nicht mehr betrieben werden, da die Vorlauftemperatur einer Wärmepumpe nicht ausreichend groß ist. Daher wird vorgeschlagen, dass an dem Heizkessel 2 die Rohre 4a, 4b gekappt werden und der Heizkessel 2 entfernt wird. Außerdem werden die Heizkörper 8 von den Rohren 4a, 4b getrennt und ebenfalls entfernt. Die dann vorliegende Bestandsverrohrung mit den Rohren 4a, b wird anschließend so ausgestattet, dass sie mit einem Kältemittel, beispielsweise Propan betrieben werden kann. Hierbei ist eine Beschichtung mittels Spülen möglich oder wie nachfolgend gezeigt mittels einer Rohr-in-Rohr-Verrohrung.

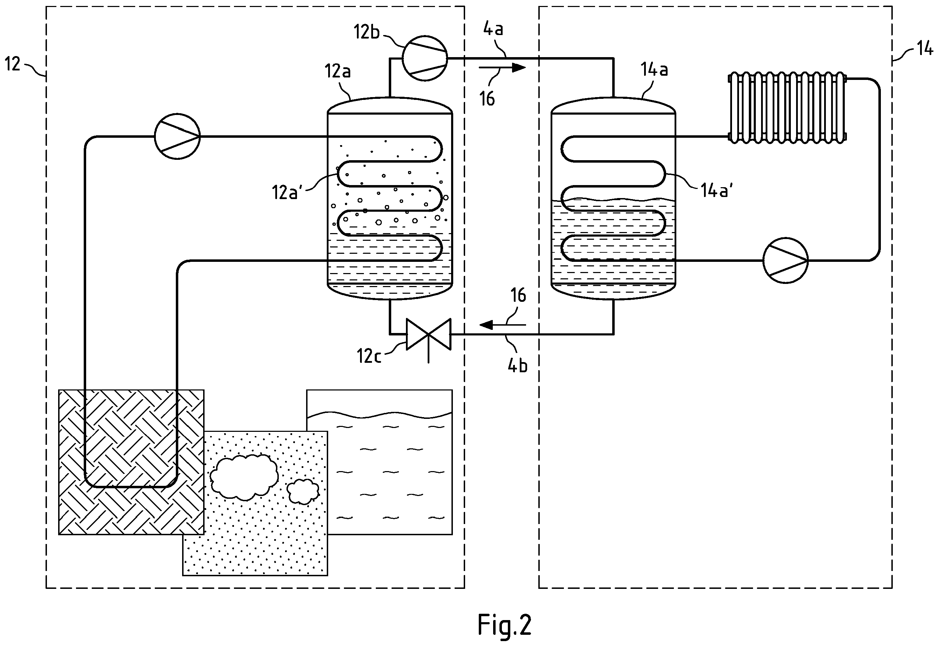

Anstelle des Heizkessels 2 wird eine Wärmepumpe 12 installiert und anstelle des Heizkörpers 8 wird ein Raumgerät 14 installiert. Dies ist in Fig. 2 gezeigt. An der Wärmepumpe 12 ist ein Verdampfer 12a zur Aufnahme von Umweltwärme vorgesehen. Ferner ist ein Verdichter 12b zum Verdichten des Kältemittels vorgesehen. Über ein mit einer Innenwandverkleidung ausgestattetes Rohr 4a fliest das Kältemittel durch die Bestandsverrohrung zu dem Raumgerät 14, an dem ein Verflüssiger 14a vorgesehen ist, der die Heizungswärme abgibt. Das abgekühlte Fluid fließt dann über das Rohr 4b, welche ebenfalls eine Innenwandverkleidung aufweist zurück zu der Wärmepumpe 12 und wird dort über ein Expansionsventil 12c wieder an den Verdampfer 12a geführt. Das Prinzip der Wärmepumpe 12 ist hinlänglich bekannt. Im Falle eines Kühlbetriebs ist die Flussrichtung 16 genau anders herum und im Bereich der Wärmepumpe 12 ist der Verflüssiger 14a vorgesehen und im Bereich des Raumgeräts 14 der Verdampfer 12a. Für den Fall eines Heiz-/oder Kühlgeräts sind sowohl im Bereich der Wärmepumpe 12 als auch im Bereich des Raumgeräts 14 sowohl Verdampfer 12a als auch Verflüssiger 14a vorgesehen. Die Flussrichtung wird entsprechend umgestellt, sodass die Rohre 4a, b je nach Betriebsart Vorlauf oder Rücklauf für das Raumgerät 14 darstellen. Ferner sind dann entsprechende Ventile vorgesehen, mit denen das Kältemittel je nach Betriebsart an der Wärmepumpe 12 und dem Raumgerät 14 jeweils dem Verdampfer 12a oder dem Verflüssiger 14 zuführen. Außerdem sind am Verdampfer 12a und am Verflüssiger 14a Wärmetauscher 12a' und 14a' vorgesehen, mit denen ein weiteres Medium gekühlt/geheizt werden kann, um an den Raum oder die Umgebung Abwärme oder Kälte abzugeben.

Durch die Innenwandverkleidung der Rohre 4a, 4b ist es möglich, das Kältemittel von der Wärmepumpe 12 zum Raumgerät 14 und zurück zu transportieren. Da das Kältemittel für den Betrieb mit einer Wärmepumpe stark expandiert und stark komprimiert wird, ergeben sich unterschiedliche Anforderungen an die Innendurchmesser der Rohre, welche mit Hilfe der Innenwandverkleidung gewährleistet wird.

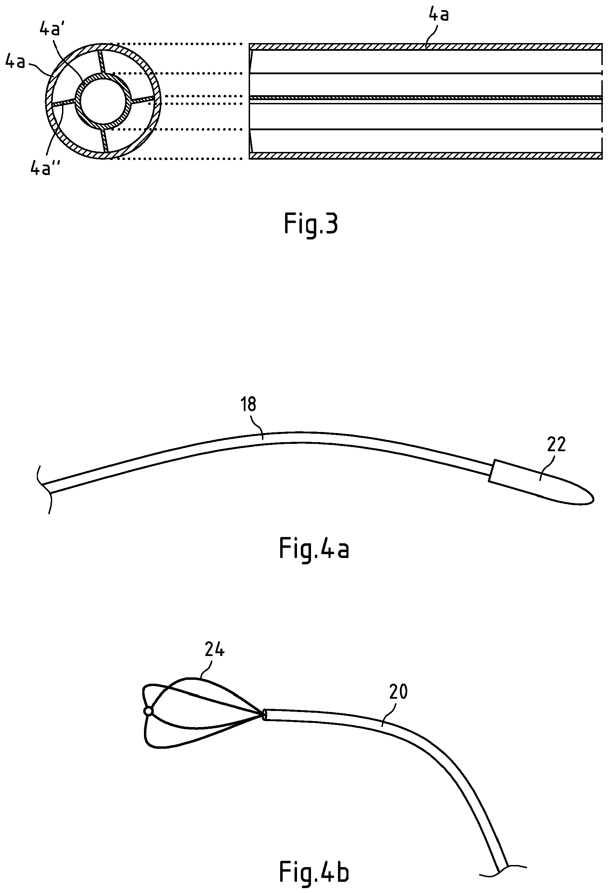

Ein Rohr 4a ist beispielsweise in der Fig. 3 dargestellt. In dem Rohr 4a ist ein Innenrohr 4a' mit radial nach außen weisenden Finnen 4a". Zu erkennen sind vier Finnen 4a" mit einem gleichen Winkelabstand zueinander, welche radial nach außen weisen und in einem Winkel zum Radius des Rohres 4a' stehen. Dieses Innenrohr 4a' wird in das Rohr 4a eingeführt und mit Hilfe der Finnen 4a" von der Innenwand des Rohres 4a beabstandet.

Zum Einführen des Rohres 4a' in das Rohr 4a wird beispielsweise zunächst ein Führungsseil 18 von dem einen Ende des Rohres 4a in das Rohr 4a eingeführt und ein Zugseil 20 von der jeweils anderen Seite des Rohres 4a.

Die Spitze des Führungsseils 18 kann als permanentmagnetische Spitze 22 ausgeführt sein und am Ende des Zugseils 20 kann eine Fangschlaufe 24 vorgesehen sein.

Durch den Permanentmagneten 22 kann das Führungsseil 18 in dem Rohr 4a geführt werden, beispielsweise in dem von außen ein starker Magnet angelegt wird. Hierdurch kann das Führungsseil durch das Rohr 4a gezogen werden. Darüber hinaus kann mit Hilfe der Fangschlaufe 24 die Spitze 22 eingefangen werden und mittels des Zugseils aus dem Rohr heraus gezogen werden.

Nachdem das Führungsseil 18 durch das Rohr 4a gezogen wurde, kann an dem Führungsseil 18 das Innenrohr 4a' befestigt werden und mit Hilfe des Führungsseils 18 durch das Rohr 4a gezogen werden. Das selbe kann für ein Rohr 4b erfolgen.

Nachdem die Innenrohre eingezogen wurden oder die Rohre 4a, 4b mittels Spülen beschichtet wurden, können die Rohre 4a, b mit jeweils unterschiedlichen Innendurchmessern an die Wärmepumpe 12 respektive ein oder mehrere Raumgeräte 14 angeschlossen werden.

## Patentansprüche

1. Verfahren zum Nachrüsten einer Bestandsverrohrung eines Gebäudes umfassend:
- Einbringen einer Innenwandverkleidung in ein erstes Rohr (4a) der Bestandsverrohrung,
- Einbringen einer Innenwandverkleidung in ein zweites Rohr (4b) der Bestandsverrohrung,
- wobei ein Innendurchmesser des verkleideten ersten Rohrs (4a) kleiner ist, als ein Innendurchmesser des verkleideten zweiten Rohrs (4b),
**dadurch gekennzeichnet,**
- **dass** zumindest eine der Innenwandverkleidungen eine Rohr-in-Rohr-Verkleidung mit einem Innenrohr (4a') ist und
- **dass** das Innenrohr (4a') mit an seiner Außenwand im Wesentlichen radial nach außen weisenden Finnen (4a") ausgestattet ist, wobei entlang des Außenumfangs des Innenrohrs (4a`) zumindest zwei, bevorzugt drei oder mehr Finnen (4a") in einem Winkelabstand zueinander angeordnet sind.

2. Verfahren nach Anspruch 1,
**dadurch gekennzeichnet,**
- **dass** die Rohre (4a, b) der Bestandsverrohrung Vorlauf und Rücklauf eines Bestandsheizkörpers sind.

3. Verfahren nach einem der vorangehenden Ansprüche,
**dadurch gekennzeichnet,**
- **dass** zumindest eine der Innenwandverkleidungen eine Innenwandbeschichtung ist.

4. Verfahren nach Anspruch 1,
**dadurch gekennzeichnet,**
- **dass** zumindest eines der Rohre (4a, b) mit einem flüssigen Beschichtungsmittel gespült wird, und
- **dass** das Beschichtungsmittel nach dem Spülen aushärtet, insbesondere
- **dass** das Spülen und anschließende Aushärten zumindest zwei Mal hintereinander durchgeführt wird.

5. Verfahren nach einem der vorangehenden Ansprüche,
**dadurch gekennzeichnet,**
- **dass** das Innenrohr (4a`) von einem Einlass zu einem Auslass des Rohres der Bestandsverrohrung geführt wird.

6. Verfahren nach Anspruch 1,
**dadurch gekennzeichnet,**
- **dass** die Finnen (4a") sich entlang der Längserstreckung des Innenrohrs erstrecken und dass die Finnen in ihrer radialen Erstreckung bogenförmig sind.

7. Verfahren nach einem der vorangehenden Ansprüche,
**dadurch gekennzeichnet,**
- **dass** die mit den Innenwandverkleidungen ausgestatteten Rohre (4a, b) an ein Heiz- und/oder Kühlgerät angeschlossen werden, insbesondere
- **dass** die an das Heiz- und/oder Kühlgerät angeschlossenen, ausgestatteten Rohre (4a, b) mit einem Fluid beschickt werden, wobei das Fluid in dem ersten Rohr (4a) flüssig ist und das Fluid in dem zweiten Rohr (4b) gasförmig ist.

8. Verfahren nach einem der vorangehenden Ansprüche,
**dadurch gekennzeichnet,**
- **dass** die Rohre (4a, b) eingangsseitig mit einer zentralen Wärmepumpe verbunden werden und dass die Rohre (4a, b) ausgangsseitig mit einem raumseitigen Heiz- und/oder Kühlgerät verbunden werden, insbesondere
- **dass** das raumseitige Heiz- und/oder Kühlgerät einen Verdampfer und/oder einen Kondensator aufweist.

9. Verfahren nach einem der vorangehenden Ansprüche,
**dadurch gekennzeichnet,**
- **dass** zur Innenraumverkleidung ein endoskopisches Führungsseil (18) in eine erste Öffnung eines der Rohre (4a, b) eingeführt wird und dass ein Zugseil (20) in eine zweite Öffnung des Rohres (4a, b) eingeführt wird und dass das Führungsseil (18) mittels des Zugseils (20) durch das Rohr (4a, b) gezogen wird.

10. Verfahren nach Anspruch 9,
**dadurch gekennzeichnet,**
- **dass** das Führungsseil (18) eine in das Rohr (4a, b) einführbare Spitze (22) mit umlaufenden Finnen aufweist.

11. Verfahren nach einem der Ansprüche 9 oder 10,
**dadurch gekennzeichnet,**
- **dass** das Führungsseil (18) eine in das Rohr (4a, b) einführbare, permanentmagnetische Spitze (22) aufweist.

12. Verfahren nach Anspruch 11,
**dadurch gekennzeichnet,**
- **dass** die permanentmagnetische Spitze (22) von außerhalb des Rohres (4a, b) durch Magnetkraft bewegt wird.

13. Verwendung einer mit einem Verfahren gemäß einem der Ansprüche 1 bis 12 nachgerüsteten Bestandsverrohrung,
**dadurch gekennzeichnet,**
- **dass** das Fluid in dem verkleideten ersten Rohr (4a) flüssig geführt wird und dass das Fluid in dem verkleideten zweiten Rohr (4b) gasförmig geführt wird.

14. Verwendung nach Anspruch 13,
**dadurch gekennzeichnet,**
- **dass** bei einem Wechsel eines Betriebsmodus des raumseitigen Heiz- und/oder Kühlgeräts die Flussrichtung des Fluids in den Rohren gewechselt wird.

15. Verwendung nach einem der Ansprüche 13 oder 14,
**dadurch gekennzeichnet,**
- **dass** in einem Kühlbetrieb des raumseitigen Heiz- und/oder Kühlgeräts das erste Rohr für den Vorlauf des Fluids genutzt wird und das zweite Rohr für den Rücklauf des Fluids genutzt wird und/oder dass in einem Heizbetrieb des raumseitigen Heiz- und/oder Kühlgeräts das erste Rohr für den Rücklauf des Fluids genutzt wird und das zweite Rohr für den Vorlauf des Fluids genutzt wird.

## Claims

1. A method for retrofitting existing piping of a building comprising:
- Inserting an interior wall lining into a first pipe (4a) of the existing piping,
- Inserting an interior wall lining into a second pipe (4b) of the existing piping,
- wherein an inner diameter of the clad first pipe (4a) is smaller than an inner diameter of the clad second pipe (4b),
**characterized in that**
- at least one of the inner wall linings is a pipe-in-pipe lining with an inner pipe (4a'), and
- the inner pipe (4a') is provided with fins (4a") on its outer wall pointing substantially radially outwardly, wherein at least two, preferably three or more fins (4a") are arranged at an angular distance from one another along the outer circumference of the inner pipe (4a').

2. The method according to claim 1,
**characterized in that**
- the pipes (4a, b) of the existing piping are the supply and return of an existing radiator.

3. The method according to any one of the preceding claims,
**characterized in that**
- at least one of the interior wall linings is an interior wall coating.

4. The method according to claim 1,
**characterized in that**
- at least one of the pipes (4a, b) is flushed with a liquid coating agent, and
- that the coating agent hardens after rinsing, in particular
- that rinsing and subsequent curing is performed at least twice in succession.

5. The method according to any one of the preceding claims,
**characterized in that**
- the inner pipe (4a') is led from an inlet to an outlet of the pipe of the existing piping.

6. The method according to claim 1,
**characterized in that**
- the fins (4a") extend along the longitudinal extension of the inner pipe and that the fins are arcuate in their radial extension.

7. The method according to any one of the preceding claims,
**characterized in that**
- the pipes (4a, b) equipped with the inner wall linings are connected to a heating and/or cooling device, in particular
- that the equipped pipes (4a, b) connected to the heating and/or cooling device are fed with a fluid, the fluid in the first pipe (4a) being liquid and the fluid in the second pipe (4b) being gaseous.

8. The method according to any one of the preceding claims,
**characterized in that**
- the pipes (4a, b) are connected on the input side to a central heat pump and that the pipes (4a, b) are connected on the output side to a room-side heating and/or cooling device, in particular
- the room-side heating and/or cooling device comprises an evaporator and/or a condenser.

9. The method according to any one of the preceding claims,
**characterized in that**
- an endoscopic guide rope (18) is inserted into a first opening of one of the pipes (4a, b) for interior lining and that a pull rope (20) is inserted into a second opening of the pipe (4a, b) and that the guide rope (18) is pulled through the pipe (4a, b) by means of the pull rope (20).

10. The method according to claim 9,
**characterized in that**
- the guide rope (18) has a tip (22) with circumferential fins that can be inserted into the pipe (4a, b).

11. The method according to any one of claims 9 or 10,
**characterized in that**
- the guide rope (18) has a permanent magnetic tip (22) insertable into the pipe (4a, b).

12. The method according to claim 11,
**characterized in that**
- the permanent magnetic tip (22) is moved from outside the pipe (4a, b) by magnetic force.

13. Use of an existing piping system retrofitted with a method according to any one of claims 1 to 12,
**characterized in that**
- the fluid is guided in liquid form in the clad first pipe (4a) and that the fluid is guided in gaseous form in the clad second pipe (4b).

14. The use according to claim 13,
**characterized in that**
- when an operating mode of the room-side heating and/or cooling device is changed, the direction of flow of the fluid in the pipes is changed.

15. The use according to any one of claims 13 or 14,
**characterized in that**
- in a cooling mode of the room-side heating and/or cooling device, the first pipe is used for the supply of the fluid and the second pipe is used for the return of the fluid and/or that in a heating mode of the room-side heating and/or cooling device, the first pipe is used for the return of the fluid and the second pipe is used for the supply of the fluid.

## Revendications

1. Procédé de mise à niveau d'une tuyauterie existante d'un bâtiment comprenant :
- introduire un revêtement de paroi intérieure dans un premier tube (4a) de la tuyauterie existante,
- introduire un revêtement de paroi intérieure dans un deuxième tube (4b) de la tuyauterie existante,
- où un diamètre intérieur du premier tube revêtu (4a) est inférieur à un diamètre intérieur du deuxième tube revêtu (4b),
**caractérisé en ce**
- **qu'**au moins l'un des revêtements de paroi intérieure est un revêtement de tube-dans-tube avec un tube intérieur (4a'), et
- **que** le tube intérieur (4a') est équipé d'ailettes (4a") sur sa paroi extérieure orientées essentiellement radialement vers l'extérieur, où au moins deux, de préférence trois ou plus d'ailettes (4a") sont disposées à une distance angulaire les unes des autres le long de la périphérie extérieure du tube intérieur (4a').

2. Procédé selon la revendication 1,
**caractérisé en ce**
- **que** les tubes (4a, b) de la tuyauterie existante sont l'aller et le retour d'un radiateur existant.

3. Procédé selon l'une des revendications précédentes,
**caractérisé en ce**
- **qu'**au moins l'un des revêtements de paroi intérieure est une enduction de paroi intérieure.

4. Procédé selon la revendication 1,
**caractérisé en ce**
- **qu'**au moins l'un des tubes (4a, b) est rincé avec un agent d'enduction liquide, et
- **que** l'agent d'enduction durcisse après le rinçage, en particulier
- **que** le rinçage et le durcissement suivant sont effectués au moins deux fois de suite.

5. Procédé selon l'une des revendications précédentes,
**caractérisé en ce**
- **que** le tube intérieur (4a') est guidé d'une entrée à une sortie du tube de la tuyauterie existante.

6. Procédé selon la revendication 1,
**caractérisé en ce**
- **que** les ailettes (4a") s'étendent le long de l'extension longitudinale du tube intérieur et que les ailettes sont en forme d'arc dans leur extension radiale.

7. Procédé selon l'une des revendications précédentes,
**caractérisé en ce**
- **que** les tubes (4a, b) équipés des revêtements de paroi intérieure sont raccordés à un appareil de chauffage et/ou de refroidissement, en particulier
- **que** les tubes (4a, b) équipés, raccordés à l'appareil de chauffage et/ou de refroidissement sont alimentés avec un fluide, où le fluide dans le premier tube (4a) est liquide et le fluide dans le deuxième tube (4b) est gazeux.

8. Procédé selon l'une des revendications précédentes,
**caractérisé en ce**
- **que** les tubes (4a, b) sont reliés côté entrée à une pompe à chaleur centrale et que les tubes (4a, b) sont reliés côté sortie à un appareil de chauffage et/ou de refroidissement situé dans une pièce, en particulier
- **que** l'appareil de chauffage et/ou de refroidissement côté pièce a un évaporateur et/ou un condenseur.

9. Procédé selon l'une des revendications précédentes,
**caractérisé en ce**
- **que**, pour le revêtement intérieur, un câble de guidage endoscopique (18) est introduit dans une première ouverture de l'un des tubes (4a, b) et qu'un câble de traction (20) est introduit dans une deuxième ouverture du tube (4a, b) et que le câble de traction (18) est tiré à travers le tube (4a, b) au moyen du câble de traction (20).

10. Procédé selon la revendication 9,
**caractérisé en ce**
- **que** le câble de traction (18) a une pointe (22) introduisable dans le tube (4a, b) avec des ailerons périphériques.

11. Procédé selon l'une des revendications 9 ou 10,
**caractérisé en ce**
- **que** le câble de traction (18) a une pointe (22) à aimant permanent introduisable dans le tube (4a, b).

12. Procédé selon la revendication 11,
**caractérisé en ce**
- **que** la pointe à aimant permanent (22) est déplacée par force magnétique depuis l'extérieur du tube (4a, b).

13. Utilisation d'une tuyauterie existante, mise à niveau par un procédé selon l'une des revendications 1 à 12,
**caractérisé en ce**
- **que** le fluide est guidé sous forme liquide dans le premier tube revêtu (4a) et que le fluide est guidé sous forme gazeuse dans le deuxième tube revêtu (4b).

14. Utilisation selon la revendication 13,
**caractérisé en ce**
- **qu'**en cas de changement d'un mode de fonctionnement de l'appareil de chauffage et/ou de refroidissement côté pièce, la direction d'écoulement du fluide dans les tubes est échangée.

15. Utilisation selon l'une des revendications 13 ou 14,
**caractérisé en ce**
- **que**, dans un mode de refroidissement de l'appareil de chauffage et/ou de refroidissement côté pièce, le premier tube est utilisé pour l'aller du fluide et le deuxième tube est utilisé pour le retour du fluide et/ou que, dans un mode de chauffage de l'appareil de chauffage et/ou de refroidissement côté pièce, le premier tube est utilisé pour le retour du fluide et le deuxième tube est utilisé pour l'aller du fluide.
